# EUROPÄISCHE PATENTSCHRIFT

(11) **EP 1 315 931 B1**
(45) Veröffentlichungstag und Bekanntmachung des Hinweises auf die Patenterteilung: **25.05.2005**
(21) Anmeldenummer: 01967068.6
(22) Anmeldetag: 03.09.2001
(51) Int. Cl.: F16L 39/00

(54) **FLANSCHVERBINDUNG FÜR HOCHDRUCK-DOPPELMANTELROHRE**
FLANGE CONNECTION FOR DOUBLE-JACKET HIGH-PRESSURE PIPES
RACCORD A BRIDES POUR TUYAUX HAUTE PRESSION A DEUX ENVELOPPES

(30) Priorität: 07.09.2000 DE 10044336
(43) Veröffentlichungstag der Anmeldung: 04.06.2003
(73) Patentinhaber: Uhde High Pressure Technologies GmbH, 58093 Hagen (DE)
(72) Erfinder: HILLER, Waldemar, 58638 Iserlohn (DE); HILTAWSKY, Josef, 58239 Schwerte (DE); KÖRNER, Jörg-Peter, 58099 Hagen (DE)
(86) Internationale Anmeldenummer: PCT/DE2001/003424
(87) Internationale Veröffentlichungsnummer: WO 2002/023078

(56) Entgegenhaltungen:
- DE-A- 3 147 295
- DE-A- 3 718 975

## Beschreibung

Die Erfindung betrifft eine Flanschverbindung für Doppelmantel-Hochdruckrohre im Einsatzbereich von 300 bis 10.000 bar. Solche Doppelmantel-Hochdruckrohre werden bevorzugt, aber nicht ausschließlich eingesetzt bei der Herstellung von sogenanntem "Low Density Poly-Ethylene", im Folgenden als LDPE bezeichnet. Sie bestehen aus zwei ineinandergeschobenen Rohrleitungen, wobei in der inneren Rohrleitung das Produkt und in der äußeren Rohrleitung ein wärmetransportierendes Medium gefördert wird. Dieses wärmetransportierende Medium dient in einigen Anwendungen als Begleitbeheizung zur Temperaturhaltung, in anderen Fällen zur Aufheizung oder Wärmeabfuhr des in der inneren Rohrleitung geführten Produktes.

Aufgrund des hohen Drucks sowie der jeweiligen Temperaturen, Temperaturdifferenzen und auftretenden Wärmespannungen werden in der Hochdrucktechnik üblicherweise massive und hochfeste Materialien für Rohrleitungen, Armaturen und Formstücke eingesetzt, deren Verarbeitung aufwendig ist, insbesondere bei Verwendung von Doppelmantelrohren. Hierzu sind einschlägig bekannte Werksnormen und Firmendruckschriften veröffentlicht, z. B. von der Firma BASF AG und von der Anmelderin, der Firma Uhde Hochdrucktechnik GmbH.

Bekannte Flanschverbindungen für Doppelmantelrohre sind beispielsweise in der DE-A-31 47 295 oder der DE-A-37 18 975 gezeigt.

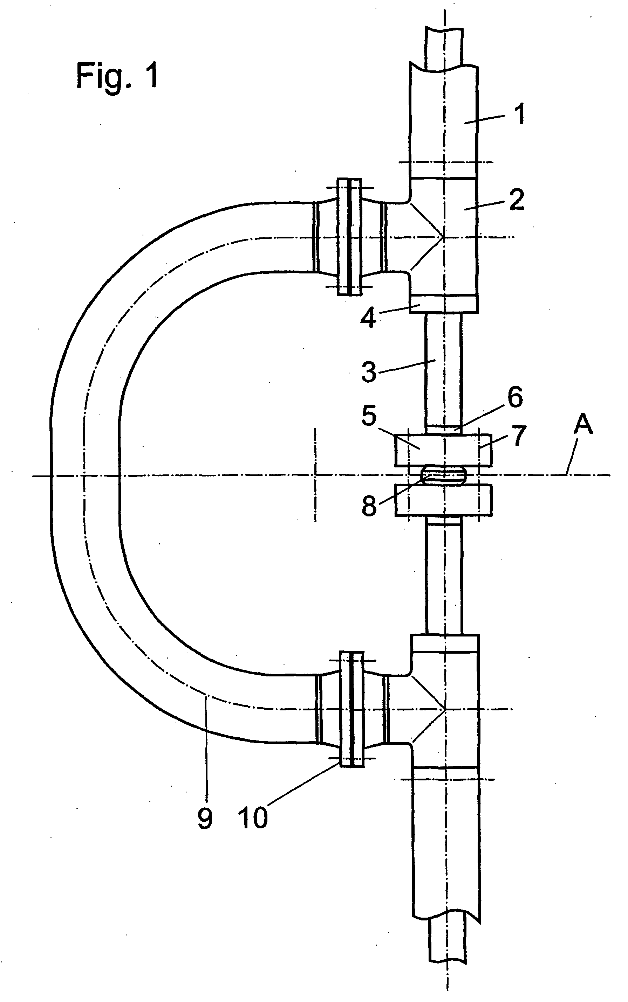

Fig. 1 zeigt eine weitere typische Verbindung zweier Doppelmantel-Hochdruck-Rohrstücke nach dem bisherigen Stand der Technik. Die Darstellung ist symmetrisch zu einer senkrecht zur Zeichenebene gelegenen Ebene A, die gezeigten Rohrstücke besitzen kreisförmige Querschnitte. Hierbei ist das Mantelrohr 1 mit dem Stutzenstück 2 verbunden, in der Regel durch eine Schweißverbindung. Durch das Stutzenstück 2 hindurchgeführt wird das Hochdruckrohr 3, das innerhalb des Mantelrohres 1 angeordnet ist und zusammen mit dem Mantelrohr 1 ein Doppelmantel-Hochdruckrohr bildet. Das Hochdruckrohr 3 wird mit der Schrumpfbuchse 4 fixiert, die üblicherweise mit einer Schweißnaht mit dem Stutzenstück 2 verbunden wird.

Da für die Herstellung des Hochdruckrohres in der Regel hochfeste, niedriglegierte Vergütungsstähle mit vergleichsweise hohem Kohlenstoffgehalt, z.B. der Stahl 30 CrNiMo 8 zur Anwendung kommen, ist eine Schweißverbindung zwischen dem innenliegenden Hochdruckrohr und den Bauteilen des außenliegenden Mantelrohres ausgeschlossen. Deshalb wird das Mantelrohr mittels einer Schrumpfverbindung fixiert, womit zugleich eine gegen den Austritt des mantelseitigen Mediums dichte Fügeverbindung zu Stande kommt.

An das Hochdruckrohr 3 wird ein Gewindeflansch 5 angebracht, der auf ein auf dem Ende des Hochdruckrohrs 3 befindlichen Gewindeansatz 6 aufgeschraubt wird. Mit Schraubenbolzen 7 wird der Gewindeflansch 5 mit seinem Gegenstück verbunden, wobei die Dichtigkeit der Verbindung durch elastisch-plastische Verformung der Dichtflächen der Dichtlinse 8 und der Dichtflächen an den stirnfiächenseitigen Enden des Hochdruckrohres 3 erreicht wird. Die elastisch-plastische Verformung der Dichtflächen wird durch die von der Dichtlinse 8 übertragenen Dichtungskraft erzeugt, die Dichtungskraft wird beim Zusammenbau der Flanschverbindung durch die Vorspannung in den Schraubenbolzen 7 aufgebaut.

Das mantelseitige Medium, das der thermischen Konditionierung der Flüssigkeit in dem Hochdruckrohr dient, wird aus dem Stutzenstück 2 in einem Bogenstück 9 um die Verbindungsstelle herumgeführt, das Bogenstück 9 wird üblicherweise mit Flanschverbindungen 10 mit den Stutzenstücken 2 verbunden.

Kennzeichnend für den Stand der Technik ist seit den 60er Jahren, dass der Mantelrohranschluss, der aus den Stutzenstücken 2 und den Schrumpfbuchsen 4 gebildet wird, räumlich getrennt von den Gewindeanschlüssen auf dem Hochdruckrohr, die durch die Gewindeflansche 5 und die Gewindeansätze 6 gebildet werden, angebracht ist. Der Abstand zwischen Schrumpfbuchse 4 und Gewindeflansch 5 wird nach Fertigungs- und Handhabungsgesichtspunkten, insbesondere dem Platzbedarf beim maschinellen Anziehen der Schraubenbolzen 7, gewählt. Dieser Platzbedarf ist nachteilig, da die Rohrenden aufwendig zu bearbeiten sind und dem Prozess nicht als Wärmetauscherfläche zur Verfügung stehen.

Die Aufgabe der Erfindung ist es daher, die Flanschverbindungen wirtschaftlich zu gestalten, nicht temperierbare Hochdruckrohr-Abschnitte zu vermeiden, Bauraum einzusparen und bei Anwendung als Doppelrohr-Wärmetauscher dessen Effizienz zu steigern.

Die Erfindung löst die Aufgabe dadurch, dass zumindest bei einem der beiden hochdruck-rohrseitigen Flanschanschlüsse der Mantelrohrabschluss als Fügeflansch ausgebildet ist, dieser Fügeflansch mittels einer Fügeverbindung auf der Außenseite des Hochdruckrohres fixiert wird, welche Fügeverbindung in axialer Richtung des Hochdruckrohres auftretende Längskräfte und die Dichtungskraft aufzunehmen imstande ist, wobei der Fügeflansch die erforderlichen Bohrungen für die Aufnahme der Schraubenbolzen aufweist.

Die Fügeverbindung des erfindungsgemäßen Fügeflansches wird dabei bevorzugt als Schrumpfverbindung ausgeführt, es ist jedoch ebenso möglich, die Fügeverbindung als Lötverbindung, als Klebeverbindung oder einer beliebigen, die erforderlichen Festigkeitserfordernisse erfüllenden, nicht formschlüssigen Verbindung auszuführen, ohne den Erfindungsgedanken zu verlassen.

Der erfindungsgemäße Fügeflansch wird bevorzugt aus Stahl hergestellt, es ist jedoch in Abhängigkeit der jeweiligen Einsatzbedingungen ebenso möglich, andere Werkstoffe einzusetzen, etwa Titan, keramische Werkstoffe oder Glasfaser verstärkte oder Karbonfaser verstärkte, synthetische Kunststoffe.

Besondere Vorteile ergeben sich, wenn nicht nur einer der beiden Hochdruck-Rohrabschlüsse, sondern beide Hochdruck-Rohrabschlüsse durch den erfindungsgemäßen Fügeflansch miteinander verbunden werden.

In einer weiteren Ausgestaltung der Erfindung kann auf mindestens einem Ende der Hochdruckrohre ein Gewinde angebracht werden, auf dem ein Stoppring positioniert wird. Der Fachmann wird eine solche Option insbesondere dann wahrnehmen, wenn er in besonderen Fällen die Schrumpfverbindung durch eine Schraubverbindung zusätzlich sichern will, etwa dann, wenn die in axialer Richtung wirkenden Längskräfte so groß sind, dass die solche Kräfte allein aufnehmende Schrumpfverbindung einen wirtschaftlich unverhältnismäßigen Fertigungsaufwand erfordern würde.

In einer weiteren Ausgestaltung der Erfindung wird ein erfindungsgemäßer Fügeflansch geteilt ausgeführt, wobei ein innerer Teil die Fügeverbindung und ein äußerer Teil die Bohrungen für die Schraubenbolzen enthält. Die Verbindung der beiden Teile des Fügeflansches erfolgt vorzugsweise formschlüssig. Der Vorteil eines solchen geteilten Fügeflansches besteht darin, dass nicht schon bei der Vormontage der gegenüberliegenden Flansche und bei dem anschließenden Fügevorgang darauf geachtet werden muss, dass die Bohrungen für die Schraubenbolzen stets genau fluchten.

In einer bevorzugten Ausführungsform besteht diese formschlüssige Verbindung aus einer umlaufenden, konzentrisch zur Hochdruckrohr-Mittelachse und in radialer Richtung zwischen der Fügeverbindung und dem Teilkreisdurchmesser der Schraubenbolzen angeordneten Gewinde-Gegengewinde-Verbindung. Das Gewinde ermöglicht eine nachträgliche Ausrichtung der Bohrungen für die Schraubenbolzen durch Drehen des äußeren Teils des Fügeflansches.

Eine weitere Ausgestaltung der Teilung des Fügeflansches ist mittels einer einfachen Konusverbindung möglich, wobei beide Teile des Fügeflansches jeweils zueinander fluchtende konische Flächen mit dem gleichen Öffnungswinkel aufweisen, die Öffnung des jeweiligen Konus-Kegels zu der Flanschverbindung hinzeigt und die Spitze des Konus-Kegels auf der Mittelachse der verbundenen Hochdruckrohre liegt. Der Vorteil dieser Konusverbindung besteht darin, dass beim Anziehen der Bolzenschrauben eine selbstzentrierende Kraft auf die Hochdruckrohre wirkt.

In einer weiteren Ausgestaltung der Erfindung wird der Mantelraum im Mantelrohr in der Weise gestaltet, dass das Wärme übertragende Medium, weiches auf der Zuströmseite der Flanschverbindung durch den Mantelraum um das innenliegende Hochdruckrohr strömt, zuerst die ihr zugewandte Fläche des Fügeflansches passieren muss, bevor sie über einen Stutzen in eine Umleitungsstrecke, die beispielsweise als Bogenstück ausgeführt sein kann, eingeleitet wird.

In einer weiteren Ausgestaltung der Erfindung wird der Mantelraum im Mantelrohr in der Weise gestaltet, dass das Wärme übertragende Medium, weiches auf der Abströmseite der Flanschverbindung durch den Mantelraum um das innenliegende Hochdruckrohr strömt, nach dem Passieren des Stutzens der Umleitungsstrecke zuerst die ihr zugewandte Fläche des Fügeflansches passieren muss, bevor sie in den Mantelraum eintritt, der auf der der Flanschverbindung abgewandten Seite des Stutzens liegt.

Der Vorteil dieser beiden letztgenannten Ausgestaltungen der Erfindung ist, dass im Mantelraum zwischen dem Stutzen der Umleitungsstrecke und dem Fügeflansch kein Strömungs-Totraum entsteht, in dem sich eine verschlechterte Wärmeübertragung einstellen könnte.

Die Erfindung wird anhand der Beispiele in Fig. 2, Fig. 3 und Fig. 4 näher erläutert. Hierbei zeigen:
- Fig. 2: eine Schnittzeichnung der erfindungsgemäßen Flanschverbindung als solcher,
- Fig. 3: ein Ausführungsbeispiel mit Mantelrohr-Umleitung und
- Fig. 4: die Lage von Sperrblechen im Mantelraum im Bereich von Stutzen und Fügeflansch.

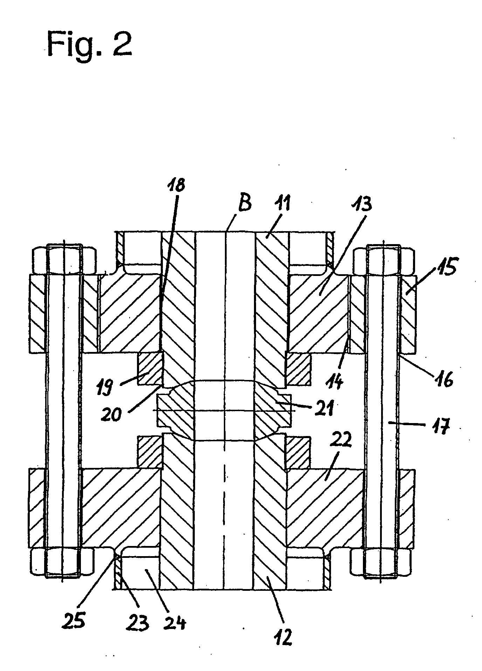

Fig. 2 zeigt eine aus zwei erfindungsgemäßen Fügeflanschen bestehende Flanschverbindung, wobei auf der oberen Seite ein geteilter Fügeflansch und auf der unteren Seite ein ungeteilter Fügeflansch zu sehen ist. Der gezeigte Schnitt ist achsensymmetrisch bezüglich der Mittelachse B. Verbunden werden die Hochdruckrohre 11 und 12. Auf das Hochdruckrohr 11 ist der innere Teil 13 des geteilten Fügeflansches, der aus dem inneren Teil 13, dem Gewinde 14 und dem äußeren Teil 15 mit den Bohrungen 16 für die Schraubenbolzen 17 besteht, an der umlaufenden Fläche 18 aufgeschrumpft. Die Schrumpfverbindung ist dabei in der Lage, alle axial wirkenden Längskräfte aufzunehmen. Zur Sicherung des geteilten Fügeflansches wird ein Stoppring 19 vorgesehen, der auf einem Gewinde 20 auf dem Hochdruckrohr aufgeschraubt und gegen den inneren Teil 13 des geteilten Fügeflansches gegengespannt ist. Die beiden Hochdruckrohre werden durch die Dichtlinse 21 gegenüber der Umgebung abgedichtet.

Im unteren Teil der Fig. 2 wird ein erfindungsgemäßer Fügeflansch 22 gezeigt, der ungeteilt ist, ansonsten aber in analoger Weise gegenüber dem im oberen Teil gezeigten Fügeflansch angeordnet, fixiert und gesichert ist. Beide Fügeflansche schließen an das jeweilige Mantelrohr, z. B. für das Hochdruckrohr 12 das Mantelrohr 23, und den jeweiligen Mantelraum, z. B. für das Hochdruckrohr 12 den Mantelraum 24 an. Fügeflansch 22 und Mantelrohr 23 können beispielsweise durch eine Schweißverbindung, z. B. für das Mantelrohr 23 die Schweißverbindung 25, fest miteinander verbunden werden.

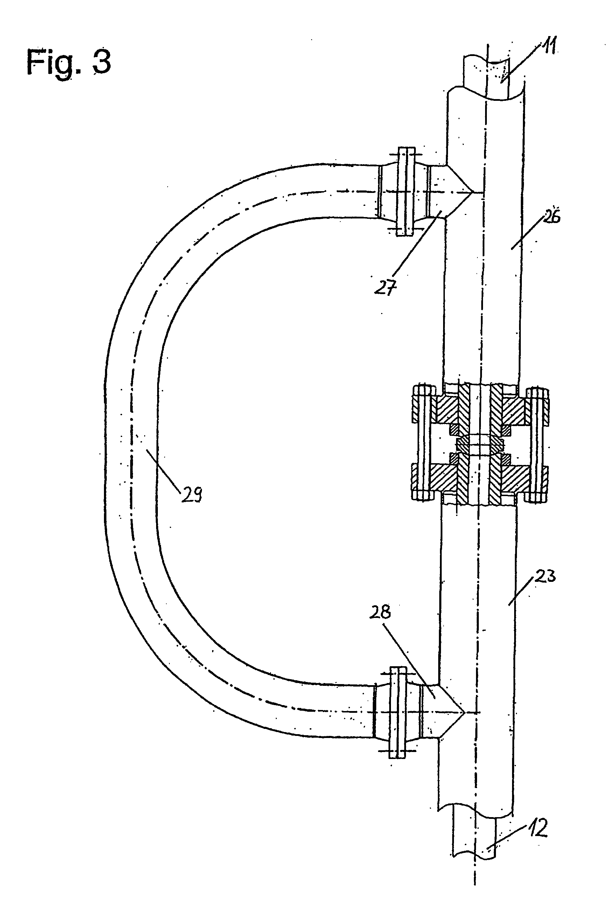

Fig. 3 zeigt die in Fig. 2 dargestellte Flanschverbindung zusammen mit der Verbindung der beiden Mantelräume der beiden zu verbindenden Doppelmantel-Hochdruckrohre. Hierbei werden auf den Mantelrohren 23 und 26 jeweils die Stutzen 27 und 28 angebracht und das Bogenstück 29 mittels Flanschverbindungen an den Stutzen 27 und 28 befestigt. Die Abstände der beiden Stutzen 27 und 28 sind frei wählbar, wobei der Platzbedarf für das maschinelle Anziehen der Schraubenbolzen berücksichtigt werden muss. Der Abstand der Stutzen 27 und 28 hat jedoch nur geringen Einfluss auf die ummantelte Fläche der Hochdruckrohre 11 und 12, da der Mantelraum unabhängig vom Abstand der Stutzen bis an den jeweiligen Fügeflansch grenzt, was ein Vorteil der Erfindung ist.

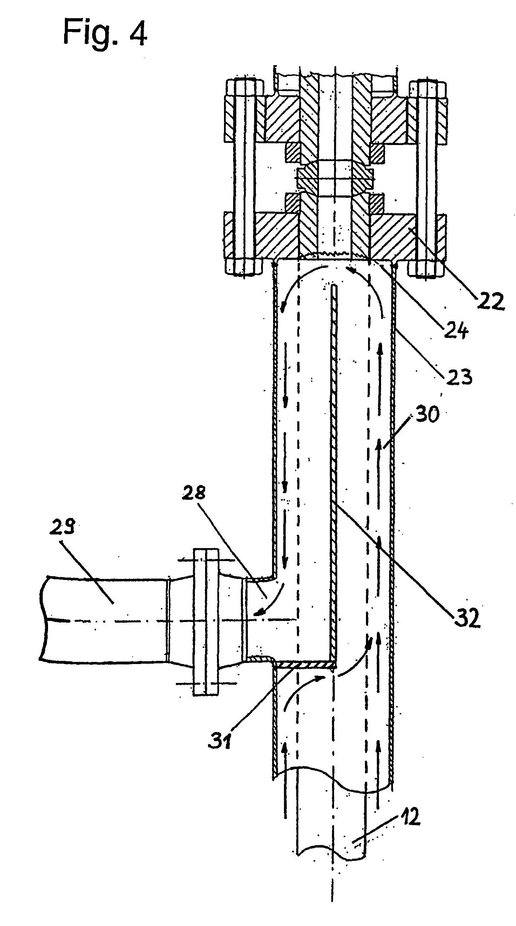

Fig. 4 zeigt beispielhaft eine Anordnung von Sperrblechen, mit denen der Mantelraum im Mantelrohr in der Weise gestaltet wird, dass das Wärme übertragende Medium, welches auf der Zuströmseite der Flanschverbindung durch den Mantelraum um das innenliegende Hochdruckrohr strömt, zuerst die ihr zugewandte Fläche des Fügeflansches passieren muss, bevor sie über einen Stutzen in eine Umleitungsstrecke eingeleitet wird. In der Ansicht ist das Mantelrohr 23 aufgeschnitten, es wird beispielhaft angenommen, dass das Wärme übertragende Medium 30, dessen Strömungsrichtung durch dargestellt durch Pfeile dargestellt wird, im Mantelraum 23 vom unteren Teil der Ansicht kommend vom Sperrblech 31 daran gehindert wird, auf direktem Weg in den Stutzen 28 einzufließen und von dort in das Bogenstück 29, vergleiche auch Fig. 3. Das Sperrblech 31 kann beispielsweise als halbierte Ringscheibe ringförmig ausgebildet sein, wobei der äußere Durchmesser dem Innendurchmesser des Mantelrohres und der innere Durchmesser dem Außendurchmesser des innenliegenden Hochdruckrohres entspricht. Es ist aber auch möglich, eine andere, den Mantelraum hälftig abschließende Form zu wählen, die den Stromlinien der sich einstellenden Strömung angepasster ist. Das Sperrblech 32 teilt den Mantelraum 24 in Längsrichtung bis kurz vor den Fügeflansch 22, wo die Strömungsrichtung des Wärme übertragenden Mediums 30 umgedreht wird. Das Sperrblech 32 besteht aus 2 Teilen, in analoger Weise zum gezeigten Schnitt befindet sich auf der der Aufsicht abgewandten Seite des Hochdruckrohres ein gleichartiges Sperrblech 32.

Die Sperrbleche 31 und 32 können auch aus einem einzigen Blech geformt sein. In der gleichen Weise können die Sperrbleche auch auf der anderen Seite der Flanschverbindung angeordnet werden.

Weitere Vorteile der Erfindung bestehen darin, dass sich Fertigungsvorteile für die Flanschverbindungen an den bogenförmigen Rohrteilen ergeben und sich die Anzahl der erforderlichen Bauteile insgesamt verringert.

### Bezugszeichenlegende:

a) herkömmlicher Stand der Technik:
   - 1: Mantelrohr
   - 2: Stutzenstück
   - 3: Hochdruckrohr
   - 4: Schrumpfbuchse
   - 5: Gewindeflansch
   - 6: Gewindeansatz
   - 7: Schraubenbolzen
   - 8: Dichtlinse
   - 9: Bogenstück
   - 10: Flanschverbindung
b) Erfindung
   - 11: Hochdruckrohr
   - 12: Hochdruckrohr
   - 13: innerer Teil
   - 14: Gewinde
   - 15: äußerer Teil
   - 16: Bohrungen
   - 17: Schraubenbolzen
   - 18: umlaufende Fläche
   - 19: Stoppring
   - 20: Gewinde
   - 21: Dichtlinse
   - 22: Fügeflansch
   - 23: Mantelrohr
   - 24: Mantelraum
   - 25: Schweißverbindung
   - 26: Mantelrohr
   - 27: Stutzen
   - 28: Stutzen
   - 29: Bogenstück
   - 30: Wärme transportierendes Medium
   - 31: Sperrblech
   - 32: Sperrblech

## Patentansprüche

1. Flanschverbindung für Doppelmantel-Hochdruckrohre im Einsatzbereich von 300 bis 10.000 bar,
wobei zumindest bei einer der beiden hochdruck-rohrseitigen Flanschanschlüsse der Mantelrohrabschluss als Fügeflansch (22, 13 mit 15) ausgebildet ist, der die erforderlichen Bohrungen (16) für Schraubenbolzen (17) aufweist,
**dadurch gekennzeichnet, dass** dieser Fügeflansch (22, 13 mit 15) mittels einer Fügeverbindung auf der Außenseite des Hochdruckrohres (11, 12) fixiert wird,
welche Fügeverbindung in axialer Richtung des Hochdruckrohres (11, 12) auftretende Längskräfte aufzunehmen imstande ist.

2. Flanschverbindung gemäß Anspruch 1, **dadurch gekennzeichnet, dass** die Fügeverbindung des Fügeflansches (22, 13 mit 15) als Schrumpfverbindung ausgeführt wird.

3. Flanschverbindung gemäß Anspruch 1, **dadurch gekennzeichnet, dass** die Fügeverbindung des Fügeflansches (22, 13 mit 15) als Lötverbindung ausgeführt wird.

4. Flanschverbindung gemäß Anspruch 1, **dadurch gekennzeichnet, dass** die Fügeverbindung des Fügeflansches (22, 13 mit 15) als Klebeverbindung ausgeführt wird.

5. Flanschverbindung gemäß einem der vorangegangen Ansprüche 1 bis 4, **dadurch gekennzeichnet, dass** der Fügeflansch (22, 13 mit 15) aus Stahl hergestellt wird.

6. Flanschverbindung gemäß einem der vorangegangen Ansprüche 1 bis 4, **dadurch gekennzeichnet, dass** der Fügeflansch (22, 13 mit 15) aus Titan hergestellt wird.

7. Flanschverbindung gemäß einem der vorangegangen Ansprüche 1 bis 4, **dadurch gekennzeichnet, dass** der Fügeflansch (22, 13 mit 15) aus keramischem Werkstoff hergestellt wird.

8. Flanschverbindung gemäß einem der vorangegangen Ansprüche 1 bis 4, **dadurch gekennzeichnet, dass** der Fügeflansch (22, 13 mit 15) aus synthetischem Werkstoff, welcher Verstärkungen aus Karbonfasern und/oder Glasfasern enthält, hergestellt wird.

9. Flanschverbindung gemäß einem der vorangegangen Ansprüche 1 bis 8, **dadurch gekennzeichnet, dass** beide miteinander zu verbindenden Hochdruck-Rohrabschlüsse durch die Fügeflansche (22, 13 mit 15) miteinander verbunden werden.

10. Flanschverbindung gemäß einem der vorangegangen Ansprüche 1 bis 9, **dadurch gekennzeichnet, dass** auf mindestens einem Ende der zu verbindenden Hochdruckrohre (11, 12) ein Gewinde (20) angebracht wird, auf dem ein Stoppring (19) positioniert wird.

11. Flanschverbindung gemäß einem der vorangegangen Ansprüche 1 bis 9, **dadurch gekenn-zeichnet, dass** der Fügeflansch (22, 13 mit 15) geteilt ausgeführt wird, wobei ein innerer Teil (13) die Fügeverbindung und ein äußerer Teil (15) die Bohrungen (16) für die Schraubenbolzen (17) enthält.

12. Flanschverbindung gemäß Anspruch 11, **dadurch gekennzeichnet, dass** die Verbindung der beiden Teile des Fügeflansches (13, 15) formschlüssig erfolgt.

13. Flanschverbindung gemäß Anspruch 12, **dadurch gekennzeichnet, dass** die formschlüssige Verbindung der beiden Teile des Fügeflansches (13, 15) aus einer umlaufenden, konzentrisch zur Hochdruckrohr-Mittelachse und in radialer Richtung zwischen der Fügeverbindung und dem Teilkreisdurchmesser der Schraubenbolzen (17) angeordneten Gewinde-Gegengewinde-Verbindung (14) besteht, wobei das Gewinde (14) eine nachträgliche Ausrichtung der Bohrungen (16) durch Drehen ermöglicht.

14. Flanschverbindung gemäß Anspruch 11, **dadurch gekennzeichnet, dass** die Verbindung der beiden Teile des Fügeflansches (13, 15) mittels einer einfachen Konusverbindung erfolgt, wobei beide Teile des Fügeflansches jeweils zueinander fluchtende konische Flächen mit dem gleichen Öffnungswinkel aufweisen, die Öffnung des jeweiligen Konus-Kegels zu der Flanschverbindung hinzeigt und die Spitze des Konus-Kegels auf der Mittelachse der verbundenen Hochdruckrohre liegt.

15. Flanschverbindung gemäß einem der vorangegangen Ansprüche 1 bis 14, **dadurch gekennzeichnet, dass** der Mantelraum (24) im Mantelrohr (23) in der Weise gestaltet ist, dass das Wärme übertragende Medium (30), welches auf der Zuströmseite der Flanschverbindung durch den Mantelraum (24) um das innenliegende Hochdruckrohr (12) strömt, zuerst die ihr zugewandte Fläche des Fügeflansches (22) passiert, bevor sie über einen Stutzen (28) in eine Umleitungsstrecke (29) eingeleitet wird.

16. Flanschverbindung gemäß einem der vorangegangen Ansprüche 1 bis 15, **dadurch gekennzeichnet**, der Mantelraum im Mantelrohr in der Weise gestaltet ist, dass das Wärme übertragende Medium, welches auf der Abströmseite der Flanschverbindung durch den Mantelraum um das innenliegende Hochdruckrohr strömt, nach dem Passieren des Stutzens der Umleitungsstrecke zuerst die ihr zugewandte Fläche des Fügeflansches passiert, bevor sie in den Mantelraum eintritt, der auf der der Flanschverbindung abgewandten Seite des Stutzens liegt.

17. Verwendung der Flanschverbindung gemäß einem der vorangegangenen Ansprüche 1 bis 16 zur Herstellung von LDPE.

## Claims

1. Flanged connection for jacketed high-pressure pipes rated for 300 to 10,000 bar, the jacket pipe end of at least one of the two jacket-side high-pressure pipe flanged connections being designed as jointed flange (22, 13, 15) which is provided with the bores (16) necessary for the flange bolts (17),
**characterised in that** this jointed flange (22, 13, 15) is fixed on the outer side of the high-pressure pipe (11, 12) by means of a jointed connection,
the said jointed connection is suited to absorb the longitudinal forces in axial direction of the high-pressure pipe (11, 12).

2. Flanged connection according to claim 1,
**characterised in that** the jointed connection of the jointed flange (22, 13, 15) is provided as shrunk connection.

3. Flanged connection according to claim 1,
**characterised in that** the jointed connection of the jointed flange (22, 13, 15) is provided as soldered connection.

4. Flanged connection according to claim 1,
**characterised in that** the jointed connection of the jointed flange (22, 13, 15) is provided as adhesive connection.

5. Flanged connection according to one of the claims 1 to 4,
**characterised in that** the jointed flange (22, 13, 15) is made of steel.

6. Flanged connection according to one of the claims 1 to 4,
**characterised in that** the jointed flange (22, 13, 15) is made of titanium.

7. Flanged connection according to one of the claims 1 to 4,
**characterised in that** the jointed flange (22, 13, 15) is made of ceramic material.

8. Flanged connection according to one of the claims 1 to 4,
**characterised in that** the jointed flange (22, 13, 15) is made of synthetic material reinforced with carbon and/or glass fibres.

9. Flanged connection according to one of the claims 1 to 8,
**characterised in that** both high-pressure pipe ends to be connected to each other are connected with the aid of jointed flanges (22, 13, 15).

10. Flanged connection according to one of the claims 1 to 9,
**characterised in that** at least one end of the high-pressure pipes (11, 12) to be connected is provided with a thread (20) to fit a stop ring (19).

11. Flanged connection according to one of the claims 1 to 9,
**characterised in that** a jointed flange (22, 13, 15) is provided as a split flange, i.e. an internal part (13) consisting of the jointed connection and an external part (15) with bores (16) for the flange bolts (17).

12. Flanged connection according to claim 11,
**characterised in that** the connection of the two jointed flange parts (13, 15) is of the non-positive locking type.

13. Flanged connection according to claim 12,
**characterised in that** this non-positive locking connection of the two jointed flange parts (13, 15) consists of a circumferential thread-counterthread connection (14) which is arranged concentrically to the centreline of the high-pressure pipe and in radial direction between the jointed connection and the pitch diameter of the flange bolts (17). The thread permits a subsequent alignment of the bores (16) for the bolts by turning the external part of the jointed flange.

14. Flanged connection according to claim 11,
**characterised in that** the two jointed flange parts (13, 15) are connected by a simple cone connection, both parts of the jointed flange having conical faces aligned with each other and provided with the same gap angle, the aperture of each cone pointing to the flanged connection and the tip of the cone being located on the centreline of the connected high-pressure pipes.

15. Flanged connection according to one of the claims 1 to 14,
**characterised in that** the jacket chamber (24) in the jacket pipe (23) is designed such that the heat transfer agent (30), which flows from the inlet side of the flanged connection through said chamber (24) extending along the inner high-pressure pipe (12), must first pass the face of the jointed flange (22) prior to flowing via a nozzle (28) into the by-pass pipe bend (29).

16. Flanged connection according to one of the claims 1 to 15,
**characterised in that** the jacket chamber (24) in the jacket pipe (23) is designed such that the heat transfer agent (30), which flows from the outlet side of the flanged connection through said chamber (24) extending along the inner high-pressure pipe (12), must pass through the by-pass nozzle and then towards the rear face of the jointed flange prior to flowing into the jacket chamber (24) which is located on the nozzle side off the flanged connection.

17. Flanged connection according to one of the claims 1 to 16 suited as flanged connection for LDPE production machinery.

## Revendications

1. Raccorderie bridée pour les tubes à haute pression (HP) et double enveloppe, étudiée pour 300 à 10,000 bars, au moins une des extrémités du tube HP étant dotée d'un raccord bridé et conçu comme bride rapportée (22,13,12), le dit raccord ayant des trous (16) nécessaires pour les boulons (17),
**caractérisée en ce que** la bride rapportée (22,13,15) est fixée à l'extérieur du tube HP (11, 12) à l'aide d'un assemblage à joint,
et **en ce que** le dit assemblage est approprié à absorber les forces longitudinales dans la direction axiale du tube HP (11, 12).

2. Raccorderie bridée selon la revendication 1,
**caractérisée en ce que** le dit assemblage de la bride rapportée (22, 13, 15) est de type serré à chaud.

3. Raccorderie bridée selon la revendication 1,
**caractérisée en ce que** l'assemblage de la bride rapportée (22, 13, 15) est de type brasé.

4. Raccorderie bridée selon la revendication 1,
**caractérisée en ce que** l'assemblage de la bride rapportée (22, 13, 15) est de type collé.

5. Raccorderie bridée selon l'une quelconque des revendications 1 à 4,
**caractérisée en ce que** la bride rapportée (22, 13, 15) est faite en acier.

6. Raccorderie bridée selon l'une quelconque des revendications 1 à 4,
**caractérisée en ce que** la bride rapportée (22, 13, 15) est faite en titane.

7. Raccorderie bridée selon l'une quelconque des revendications 1 à 4,
**caractérisée en ce que** la bride rapportée (22, 13, 15) est faite en matériau céramique.

8. Raccorderie bridée selon l'une quelconque des revendications 1 à 4,
**caractérisée en ce que** la bride rapportée (22, 13, 15) est faite en matériau synthétique renforcé par des fibres de carbone et/ou de verre.

9. Raccorderie bridée selon l'une quelconque des revendications 1 à 8,
**caractérisée en ce que** les deux extrémités du tube HP (11,12) à connecter l'une avec l'autre sont branchées à l'aide des brides rapportées (22, 13, 15).

10. Raccorderie bridée selon l'une quelconque des revendications 1 à 9,
**caractérisée en ce que** au moins une des deux extrémités du tube HP (11, 12) à connecter l'une avec l'autre, est dotée d'un raccord fileté (20) requis pour le montage d'une bague d'arrêt (19).

11. Raccorderie bridée selon l'une quelconque des revendications 1 à 9,
**caractérisée en ce que** la bride rapportée (22, 13, 15) est prévue comme élément biparti, c.-à-d. une partie intérieure (13) constituant un assemblage de joint et une partie extérieure (15) ayant des trous (16) pour la boulonnerie (17).

12. Raccorderie bridée selon la revendication 11,
**caractérisée en ce que** la liaison entre les deux parties du raccord rapporté (13, 15) est de type solidaire.

13. Raccorderie bridée selon la revendication 12,
**caractérisée en ce que** la liaison solidaire entre les deux parties de la bride rapportée (13, 15) se fait par un assemblage circonférenciel, à filetage-contrefiletage (14), disposé de manière concentrique vis-à-vis de l'axe médiane du tube HP et en direction radiale entre l'assemblage de joint et le diamètre de référence de la boulonnerie (17); le dit filetage permettra donc un ajustage postérieur des trous (16) en tournant les éléments selon besoin.

14. Raccorderie bridée selon la revendication 11,
**caractérisée en ce que** les deux parties de la bride rapportée (13, 15) sont liées à l'aide d'un cône d'assemblage simple, les deux parties de la bride rapportée étant alignées l'une par rapport à l'autre, avec le même angle d'ouverture, l'ouverture de chaque cône étant orientée vers la raccorderie bridée; la pointe de chaque cône se situe sur l'axe médiane des tubes HP liés.

15. Raccorderie bridée selon l'une quelconque des revendications 1 à 14,
**caractérisée en ce que** la chambre enveloppée (24) dans le tube d'enveloppe (23) est dessinèe de telle sorte que le fluide caloporteur (30) qui s'écoule, sur le côté d'entrée du raccord bridé, dans la dite chambre (24) le long du tube HP intérieur (12), traverse d'abord la zone en face de la bride rapportée (22) pour être renvoyé par la tubulure (28) vers le by-pass (29).

16. Raccorderie bridée selon l'une quelconque des revendications 1 à 15,
**caractérisée en ce que** la chambre enveloppée dans le tube d'enveloppe est dessinée de telle sorte que le fluide caloporteur qui s'écoule, sur le côté d'entrée du raccord bridé, dans la dite chambre et le long de tube HP intérieur, ensuite passant par la tubulure du by-pass, traverse d'abord la zone en face de la bride rapportée avant d'entrer dans la dite chambre enveloppée qui est disposée sur le côté tubulure au-delà du raccord bridé.

17. Raccorderie bridée selon l'une quelconque des revendications 1 à 16 et appropriée à l'utilisation dans les installations de production de polyéthylène à faible densité.
